# EUROPÄISCHE PATENTANMELDUNG

(11) **EP 3 336 633 A1**
(43) Veröffentlichungstag der Anmeldung: **20.06.2018**
(21) Anmeldenummer: 17200790.8
(22) Anmeldetag: 09.11.2017
(51) Int. Cl.: G05B 19/418, G05B 19/042

(54) **VERFAHREN ZUM BETREIBEN EINES MESSUMFORMERS UND ENTSPRECHENDER MESSUMFORMER**

(30) Priorität: 14.12.2016 DE 102016124326
(71) Anmelder: Endress + Hauser Conducta GmbH+Co. KG, 70839 Gerlingen (DE)
(72) Erfinder: Robl, Stefan, 46569 Hünxe (DE)
(74) Vertreter: Andres, Angelika Maria

(57) **Zusammenfassung**

Die Erfindung betrifft ein Verfahren zum Betreiben eines Messumformers (20) der Prozessautomatisierungstechnik, umfassend zumindest die Schritte: Starten des Messumformers (20) durch Starten seines Betriebssystems, wobei das Betriebssystem zumindest eine Schnittstelle bereitstellt; Starten zumindest eines Interpreters (50), wobei der Interpreter auf die Schnittstelle zugreift; und Ausführen einer Erweiterung (60) im Interpreter (50).

Die Erfindung betrifft weiter einen Messumformer (20) zur Ausführung des Verfahrens.

## Beschreibung

Die Erfindung betrifft ein Verfahren zum Betreiben eines Messumformers der Prozessautomatisierungstechnik. Die Erfindung betrifft weiter einen entsprechenden Messumformer.

Ein Messumformer oder auch Transmitter genannt ist ganz allgemein ein Gerät, das eine Eingangsgröße entsprechend einer festen Beziehung in eine Ausgangsgröße umformt. In der Prozessautomatisierungstechnik wird an einen Messumformer etwa ein Sensor angeschlossen. Die Rohmesswerte des Sensors werden im Messumformer aufbereitet, etwa gemittelt oder mittels eines Kalibrierungsmodells in eine andere Größe umgewandelt, etwa die zu bestimmende Prozessgröße, und eventuell weitergeleitet, beispielsweise an ein Leitsystem.

Üblicherweise wird an den Messumformer ein Kabel zur Verbindung an den Sensor angeschlossen. Der Messumformer ist dabei ein separates Gerät mit einem separaten Gehäuse und verschiedenen Schnittstellen. Alternativ kann der Messumformer, etwa in Form eines Schaltkreises, gegebenenfalls als Mikrocontroller o.ä. in ein Kabel oder direkt in eine Steckverbindung (siehe unten) integriert werden.

Die Verbindung Kabel zu Sensor erfolgt häufig über eine Steckverbindung, beispielsweise durch galvanisch entkoppelte, insbesondere induktive Schnittstellen. Somit können kontaktlos elektrische Signale übertragen werden. Durch diese galvanische Trennung zeigen sich Vorteile hinsichtlich Korrosionsschutz, Potentialtrennung, Verhinderung mechanischer Abnutzung der Stecker usw. Von der Anmelderin werden solche Systeme unter der Bezeichnung Memosens vertrieben.

An den Messumformer können verschiedenste Sensoren angeschlossen werden. Unter der oben genannten Bezeichnung Memosens werden von der Anmelderin Sensoren zur Messung von pH-Wert, Leitfähigkeit, Sauerstoff, Trübung und weitere vertrieben. Jeder dieser Sensoren erfordert vom Messumformer eine für ihn spezielle Software. Insbesondere muss ein entsprechender Gerätetreiber, kurz Treiber, im Messumformer vorgehalten werden. Wie oben erwähnt, berechnet der Messumformer aus ankommenden Rohdaten einen Prozesswert. Der Messumformer muss also wissen, welche Art von Sensor angeschlossen ist um aus den Rohdaten entweder den pH-Wert oder die Leitfähigkeit eines Mediums auszurechnen. Jeder Sensor besitzt dazu eine für seinen Typ eindeutige Identifikation, die beim Anschluss des Sensors an einen Messumformer gesendet wird. Für einen für den Messumformer bekannten Sensor werden entsprechend Signalverarbeitungsroutinen, Parameter, Menüführung, Feldbusanbindung etc. im Messumformer bereitgestellt. Über den Messumformer wird der Sensor parametriert, eingestellt und auf den zu messenden Prozess angepasst.

Da sehr viele verschiedene Sensoren an den Messumformer anschließbar sind und die Software im Messumformer für einen Sensor umfangreich ist, ist die Erzeugung, Wartung und das Testen der Betriebssoftware des Messumformers sehr komplex und aufwändig.

Soll ein neuer Sensor vom Messumformer unterstützt werden, etwa eine neue Generation eines bekannten Sensors oder ein komplett neuer Sensor, muss die Betriebssoftware des Messumformers, gegebenenfalls komplett, angepasst werden. Diese neue Software muss an alle bisherigen Messumformer verteilt werden. Erst nach dieser Verteilung ist der Messumformer in der Lage, den neuen Sensor zu unterstützen.

Der Erfindung liegt die Aufgabe zugrunde, die Erstellung und Wartbarkeit der Software des Messumformers zu vereinfachen und Zugleich eine nachträgliche Erweiterbarkeit eines Messumformers zu erreichen, ohne dessen Betriebssoftware austauschen zu müssen.

Die Aufgabe wird gelöst durch ein Verfahren umfassend zumindest die Schritte: Starten des Messumformers durch Starten seines Betriebssystems, wobei das Betriebssystem zumindest eine Schnittstelle bereitstellt; Starten zumindest eines Interpreters, wobei der Interpreter auf die Schnittstelle zugreift; und Ausführen einer Erweiterung im Interpreter.
Unter Betriebssystem ist in diesem Zusammenhang die gesamte Betriebssoftware bzw. Firmware des Messumformers zu verstehen, die üblicherweise aus einem Echtzeitbetriebssystem, verschiedenen Treiberschichten und Applikationssoftwaremodulen besteht.

Im Allgemeinen ist ein Interpreter ist ein Computerprogramm, das einen Programm-Quellcode im Gegensatz zu Assemblern oder Compilern nicht in eine auf dem System direkt ausführbare Datei übersetzt, sondern den Quellcode einliest, analysiert und ausführt. Die Analyse des Quellcodes erfolgt zur Laufzeit des Programmes.

In einer Ausgestaltung ist der Interpreter als Emulator, genauer als Software-Emulator, ausgestaltet. Ein Emulator ist ein Interpreter, da dieser den Maschinencode des Gastsystems befehlsweise oder in Befehlssequenzen auf einem virtuellen Prozessor abarbeitet. In anderen Worten ist der Emulator eine Ausführungseinheit, die Maschinencode einer bestimmten Architektur ausführt. Als Emulator wird ein System bezeichnet, das ein anderes in bestimmten Teilaspekten nachbildet. Das nachgebildete System erhält die gleichen Daten, führt vergleichbare Programme aus und erzielt die möglichst gleichen Ergebnisse in Bezug auf bestimmte Fragestellungen wie das zu emulierende System. Software-Emulatoren sind Programme, die Recheneinheiten nachbilden und es so ermöglichen, Software für genau diese Recheneinheit auf einer Recheneinheit mit einer anderen Architektur zu verwenden.

Der Interpreter kann auch in der Sonderform eines Emulators, nämlich in einer virtuellen Maschine ausgeführt sein. Die virtuelle Maschine kann Teile des Maschinencodes des Gastsystems auf dem Hostsystem direkt ausführen. Die Definition von Emulator bzw. virtueller Maschine ist in der Literatur nicht eindeutig und verschwimmt. Im Sinne dieser Anmeldung führt eine virtuelle Maschine große Teile ihrer Befehle nativ auf der CPU des Hostsystems aus. Da viele Befehle direkt auf der CPU des Hostsystems ausgeführt werden, muss für das Gastsystem die gleiche CPU-Architektur verwendet werden wie auf dem Hostsystem. Es ist dabei die Unterstützung des Prozessors und/oder des Betriebssystems des Hostsystems notwendig, um die Abstraktion zwischen Gast- und Hostsystem zu ermöglichen. Bei der Emulation hingegen besteht diese Notwendigkeit nicht. Bei der Emulation kann ein von der Hardware oder CPU abweichender Code ausgeführt werden. Ein gängiges Verfahren ist die Software-Emulation, welche sämtliche Funktionen von einzelnen Hardwarekomponenten in Software nachbildet. Dadurch können Programme ausgeführt werden, die für eine andere CPU geschrieben wurden. Die Software-Emulation ist somit plattformunabhängig realisierbar.

In einer Ausgestaltung ist der Interpreter als Skriptspracheninterpreter ausgestaltet.

In einer Ausgestaltung kann die Skriptsprache Lua sein. Lua ist eine imperative Skriptsprache, die sowohl funktionale als auch objektorientierte Programmierung ermöglicht. Ein Vorteil von Lua ist die geringe Größe des kompilierten Skript-Interpreters und die hohe Ausführungsgeschwindigkeit. Lua-Programme können plattformunabhängig entwickelt werden.

In einer Ausgestaltung können auf einem Messumformer ein oder mehrere Skriptspracheninterpreter und/oder Emulatoren parallel gestartet und auch parallel betrieben werden.

Ist der Interpreter gestartet, wird anschließend darauf eine Erweiterung ausgeführt. Eine Erweiterung ist Software, die nicht primär Teil des Messumformers ist, d.h. diese ist explizit nicht Bestandteil des Betriebssystems. Die Erweiterung wird zur Laufzeit geladen. Insbesondere wird die Erweiterung zur Laufzeit von einem Speicher geladen. Der Speicher kann dabei sowohl als fest in der Hardware des Messumformers integrierter Speicher (z.B. Flash-Speicher), in Form eines dem Benutzer zugänglichen Wechselspeichers (z.B. Speicherkarte) oder auch in Form eines Netzwerkspeichers, welcher durch Datenkommunikation adressiert wird (z.B. Dateiserver) realisiert sein.

Im Allgemeinen ist die Erweiterung somit Softwarecode, der in einer bestimmten (Programmier-) Sprache formuliert ist und auf dem Messumformer ausgeführt wird. Ist der Interpreter als Emulator ausgestaltet, ist die Erweiterung in Maschinencode formuliert. Ist der Interpreter als Skriptspracheninterpreter ausgestaltet, ist die Erweiterung als spezifischer Softwarecode, im oben genannten Beispiel als Lua-Code formuliert.

In einer Ausgestaltung sind pro Messumformer mehrere Interpreter ausführbar. In einer Ausgestaltung ist der Interpreter dynamisch instanzüerbar. Der Programmcode des Interpreters befindet sich einmal auf dem Messumformer, genauer auf einem Speicher des Messumformers, und wird bei einem Aufruf einer Instanz abgearbeitet. Eine Instanz ist dabei ein konkretes Vorkommen eines Objekts, hier also des Interpreters, das (nur) während seiner Laufzeit existiert. In einer Ausgestaltung ist sind bereits mehrere Interpreter statisch geladen.

In einer Ausgestaltung wird je Interpreter genau eine Erweiterung ausgeführt. Dies führt dazu, dass die Erweiterungen unabhängig voneinander ausgeführt werden können. Andernfalls müssten die Erweiterungen potentiell voneinander wissen bzw. so ausgestaltet sein, dass sie die Ressourcen eines Interpreters gemeinsam teilen. Dies erhöht die Querabhängigkeiten.

Das Betriebssystem stellt ein oder mehrere Schnittstellen bereit, die vom Interpreter genutzt werden. Der Interpreter greift auf die Schnittstellen zu bzw. interagiert über diese. Die Schnittstelle ist der Teil eines Systems, welcher der Kommunikation, d.h. dem Austausch von Informationen, dient. Nur über die Schnittstelle ist die Kommunikation zwischen zwei Teilsystemen möglich. Für ein Teilsystem ist es ohne Belang wie das jeweils andere Teilsystem mit der Information intern umgeht und die etwaigen Antworten zustande kommen. Hier soll es im Wesentlichen um Softwareschnittstellen gehen. Im Allgemeinen sind Softwareschnittstellen logische Berührungspunkte in einem Softwaresystem: Sie ermöglichen und regeln den Austausch von Kommandos und Daten zwischen verschiedenen Prozessen und Komponenten.

Um die Vorteile der Verwendung eines Interpreters mit dem Ausführen einer Erweiterung darin auf einem Messumformers hervorzuheben, soll hier nochmals kurz auf die Nachteile des Standes der Technik eingegangen werden.

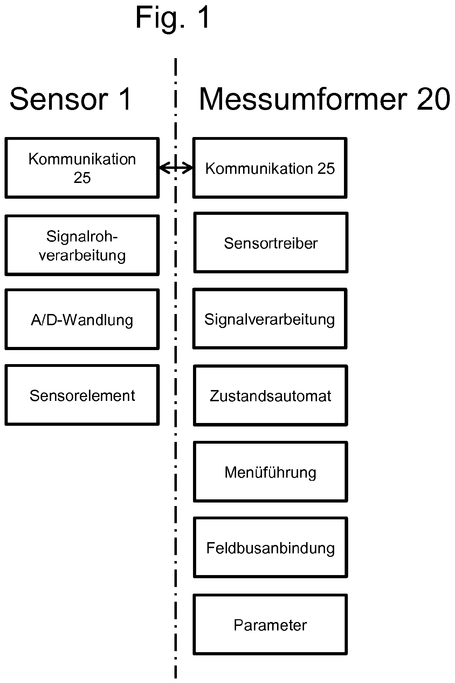

Fig. 1 zeigt dazu symbolisch dargestellt die Systemarchitektur einer Sensoranordnung mit Messumformer und Sensor nach dem Stand der Technik. Auf der Seite des Messumformers müssen sehr viele Daten bezüglich des Sensors vorgehalten werden, wobei im Folgenden auf die Aufgaben des Messumformers und des Sensors eingegangen werden soll.

### Der Sensor hat die folgenden Aufgaben:

Das Sensorelement besitzt die Aufgabe, die physikalische oder chemische Messgröße zu erfassen und in ein elektrisches analoges Signal zu wandeln. Im Fall eines pH-Sensors mit einer Glasmembran wird etwa ein Potentialunterschied zwischen einer Pufferlösung und dem zu messenden Mediums bestimmt.

Die AD-Wandlung tastet das zeit- und wertkontinuierliche analoge Signal ab und wandelt es in ein digitales, zeit- und wertdiskretes Ausgangssignal.

Die Signalrohverarbeitung besitzt die Aufgabe, das digitale Signal zu optimieren. Dies kann beispielsweise ein Median-Filter sein, um Störsignale zu filtern oder auch ein Mittelwert-Filter in Folge einer Überabtastung des Eingangssignals. Die Art der Signalrohverarbeitung kann sich je nach Sensortyp unterscheiden.

### Der Messumformer hat die folgenden Aufgaben:

Die Sensortreiber enthalten die notwendigen Informationen zur Kommunikation zwischen Messumformer und Sensor. Der Treiber ist sensorspezifisch. Unterschiedliche Sensortypen benötigen unterschiedliche Sensortreiber. Jeder Sensortyp hat somit seinen eigenen Treiber. Für alle unterschiedlichen Sensortypen muss jeweils ein eigener Treiber auf Seiten des Messumformers bereitgehalten werden.

Die Signalverarbeitung ist dafür verantwortlich, das (digitale) Rohsignal in einen physikalischen Messwert zu übertragen. Die Umwandlung des Rohsignals in einen physikalischen Messwert ist abhängig von der zu messenden Größe sowie dem gewählten Messprinzip. Im Falle des pH-Sensors mit Glasmembran wird das Rohsignal beispielsweise mit Hilfe der Nernst-Gleichung in einen pH-Wert umgerechnet. Für Sensoren mit anderen Messgrößen und Messprinzipien sind andere Formeln zur Berechnung des tatsächlichen Messwerts notwendig, sodass sich die Signalverarbeitung je nach Sensortyp unterscheidet.

Die Zustandsautomaten steuern unterschiedlichste sensorspezifische Abläufe. Zum Beispiel werden zur Kalibrierung eines Sensors verschiedene Zustände durchlaufen, die durch den Zustandsautomat gesteuert werden. Die Kalibrierung ist für jeden Sensortyp individuell.

Die Menüführung beschreibt die Hierarchie, Führung und Texte der verschiedenen Menüseiten, die auf dem Display des Messumformers zur Benutzerführung dargestellt werden. Die Menüführung ermöglicht, den gewünschten Befehl aus einem Angebot auszuwählen und ausführen zu lassen. Über die Menüführung werden Einstellungen sowohl am Messumformer als auch am Sensor vorgenommen. Die Menüführung unterscheidet sich je nach Sensortyp, da jeder Sensortyp über unterschiedliche Messgrößen, Parameter und Funktionen verfügen kann.

Die Feldbusanbindung dient der Abbildung der Messwerte und zum Sensor gehörende Parametrierungsmöglichkeiten auf einen Feldbus (z.B. HART, Profibus PA, Profibus DP, Foundation Fieldbus, Modbus). Die Feldbusanbindung ist dafür verantwortlich, die vom Gerät zur Verfügung gestellten Parameter über den Feldbus zugänglich zu machen. Jeder Feldbus besitzt unterschiedliche Möglichkeiten zur Strukturierung und Repräsentation von Daten. Die sensorspezifischen Parameter und Messwerte müssen daher in geeigneter Weise auf die Möglichkeiten des verwendeten Feldbusses adaptiert werden.
Die Parametrierung hat die Aufgabe, unterschiedliche veränderbare Werte zu verwalten. In einem pH-Sensor können die Parameter beispielsweise dazu dienen, um im Sensor einzustellen was für eine Art der Kalibrierung durchgeführt werden soll. Weitere Möglichkeiten für die Anwendung von Parametern sind einstellbare Größen wie beispielsweise der Dämpfungswert, Messgenauigkeit, Messintervall etc.

Der Messumformer umfasst eine Datenbank, welche sämtliche Systemparameter physisch verwaltet. Einige Parameter sind dabei für alle Sensortypen gleich. Dies sind die messumformerspezifischen Parameter wie etwa Firmwareversion oder Seriennummer des Messumformers. Weiter gibt es die oben bereits erwähnten sensorspezifischen Parameter.

Weiter umfasst der Messumformer eine graphische Nutzerschnittstelle, die verschiedene Inhalte wie Messgrößen, Parameter und Systemfunktionen visuell darstellt. Die darzustellenden Elemente sind in der Menüführung, siehe oben, definiert. Die zugehörigen Parameter zu den einzelnen Elementen sind in einer Datenbank abgelegt und können von dort abgerufen werden. Je nach Messumformer stellt die graphische Nutzerschnittstelle dem Anwender verschiedene Möglichkeiten zur Bedienung bereit, z.B. über ein Touchdisplay, Tasten, Drehknöpfe etc.

Weiter umfasst der Messumformer analoge und/oder digitale Ausgänge. Diese können beispielsweise den Messwert in Form eines analogen Stromwertes ausgeben oder bei Überschreiten von einstellbaren Grenzwerten (sensorspezifischer Parameter, siehe oben) ein Alarmsignal erzeugen.

Zusammengefasst muss der Messumformer aus dem Stand der Technik sehr viele sensorspezifische Daten bereithalten damit der Sensor überhaupt verwendet werden kann. Zudem sind die Möglichkeiten des Messumformers auf den Stand beschränkt, mit dem er ausgeliefert wurde. Eine Änderung der Funktionalität ist nur über ein Firmwareupdate gegeben.

Durch das Starten eines Interpreters und der Ausführung einer Erweiterung ist der Messumformer wesentlich flexibler ausgestaltet. Auch nach Auslieferung zum Anwender kann Software mit anderer Funktionalität zugefügt werden. Die Funktionalität des Messumformers ist nicht auf seinen Auslieferungszustand beschränkt. Es ist auch einfache auf Anwenderwünsche einzugehen: einzelne Anwender möchten bestimme Dinge mit dem Messumformer messen, rechnen oder darstellen, was möglicherweise für andere Anwender überhaupt nicht interessant ist. Es ist somit einfach, nur für einen bestimmen Anwender Teilaspekte der Betriebssoftware des Messumformers anzupassen.

Zudem ergeben sich inhärente Maßnahmen zum Speicherschutz und damit auch zur Sicherheit. Ein möglicher Schadcode kann aus seinem Interpreter nicht herausgreifen und dadurch die Firmware oder andere laufende Interpreter nicht negativ beeinflussen. Es gibt eine Trennung zwischen den verschiedenen Interpreter, da keine gemeinsamen Speicherbereiche genutzt werden. Die verschiedenen Interpreter interagieren nur über definierte Schnittstellen, so dass dadurch nur begrenzte Funktionen ausgeführt werden können. Beispielsweise kann die Beeinflussung der Parametrierung eines ersten Interpreter durch einen zweiten Interpreter unterbunden werden, da der zweite Interpreter nur lesend Zugriff hat. Das Ändern von Parametern des ersten Interpreters durch den zweiten Interpreter wird nur auf Anfrage hin erlaubt. Dieses Recht kann einmalig oder grundsätzlich vom Anwender vergeben werden.

Der Interpreter, insbesondere in seiner Ausgestaltung als Emulator, bildet eine Umgebung zur Ausführung einer Sensorintelligenz in Form einer virtuellen CPU mit virtuellem Arbeitsspeicher. Dieses System ist dabei abgeschottet vom restlichen System, also vom Hostsystem, also von der Firmware des Messumformers. Sollte eine Erweiterung fehlerhaft sein, hat das keine Auswirkung auf das restliche System. Dieses läuft weiter, selbst wenn die fehlerhafte Erweiterung abstürzt. Die Kommunikation erfolgt über Schnittstellen zur graphischen Benutzeroberfläche (GUI), Speicher, Feldbus, etc.

Der Interpreter ist für eine bestimmte Plattform implementiert. Allerdings ist die darauf laufende Software, hier also die Erweiterung, über die Abstraktion durch den Interpreter völlig plattformunabhängig. Dies macht es also für den Entwickler einfacher, die gesamte Software für den Messumformer sowohl zu warten, also auch zu entwickeln und auch zu erweitern.

Ein weiterer Vorteil zeigt sich im Testaufwand bei der Entwicklung der Software für den Messumformer. Der Testaufwand wird deutlich reduziert, da keine Abhängigkeiten bezüglich des Sensors im Messumformer vorhanden sind.

In einer Ausgestaltung umfasst die Erweiterung sensorspezifische Software und die folgenden Schritte werden ausgeführt: Anschließen eines Sensors an den Messumformer; Ausführen der sensorspezifischen Software; und Interaktion des Sensors über die Schnittstelle mit dem Messumformer. Dadurch wird eine Interaktion des Messumformers mit dem Sensor ermöglicht. Wie erwähnt ist die Erweiterung nicht Teil der ausgelieferten Firmware und kann auch noch nachträglich einfach geändert werden, da nicht die komplette Firmware geändert werden muss, sondern nur diese eine spezifische Erweiterung. Dies gilt für alle Erweiterungen.

Durch die Ausführung der sensorspezifischen Software als Erweiterung im Interpreter ist eine Aufwärtskompatibilität gewährleistet. In anderen Worten kann dadurch ein zukünftiger Sensor an einen heutigen Messumformer angeschlossen werden und er funktioniert. Im Allgemeinen ist Aufwärtskompatibilität die Verwendbarkeit oder Kompatibilität älterer oder veralteter Versionen zu den Anwendungsbedingungen einer neueren Version. Dies ist gewährleistet, da die Erweiterung wie erwähnt auch nach Auslieferung des Messumformers einfach geändert werden können. Dies wird besonders ersichtlich mit der unten genannten Ausgestaltung, wenn die sensorspezifische Software vom Sensor auf den Messumformer geladen wird.

In einer Ausgestaltung führt die die sensorspezifische Software zumindest einen der Schritte aus: Ausführen des Sensortreibers; Signalverarbeitung von Sensordaten; Ausführen eines oder mehrerer Zustandsautomaten; Parametrierung des Sensors; Aufstellung der Menüführung des Sensors; oder Feldbusanbindung des Sensors.
Auf die Schritte der sensorspezifischen Software wurde bereits oben eingegangen, und dies soll and dieser Stelle noch ergänzt werden.

Im Allgemeinen gewährleistet der Sensortreiber die Interaktion des Messumformers mit dem angeschlossenen Sensor. Dazu kommuniziert er auf der einen Seite mit dem Sensor und tauscht Steuersignale und Daten aus. Auf der anderen Seite bietet der Treiber dem Messumformer eine Schnittstelle, so dass der Messumformer, bzw. andere Erweiterungen auch auf Daten, etwa die Messdaten, des Sensors zugreifen können. Auch innerhalb der Erweiterung sensorspezifische Software kann dadurch auf die Daten des Sensors zugegriffen werden.

In einer Ausgestaltung sind durch die Aufstellung der Menüführung die für den Sensor erforderlichen Einstellungen, Parameter, Kalibriervorgänge, Justiervorgänge einstellbar bzw. durchführbar. In einer Ausgestaltung kann dies auch über einen Wizard , siehe unten, erfolgen. In einer Ausgestaltung erfolgt dies durch einen Zustandsautomaten.

Die sensorspezifische Menüführung wird wie auch etwa der Sensortreiber in der sensorspezifischen Software gespeichert. In einer Ausgestaltung, siehe unten, befindet sich die sensorspezifische Software im Sensor. Bei der Ausführung der sensorspezifischen Software inklusive der Menüführung im Interpreter, also etwa im Emulator, werden generische Schnittstellen verwendet, um einzelne Menüseiten und Elemente darzustellen. Beispielsweise wird eine Schnittstelle dazu verwendet, um dem Messumformer mitzuteilen, welche Elemente auf einer Menüseite dargestellt werden sollen.

In einer Ausgestaltung wird sensorspezifische Software auf den Messumformer übertragen, wenn sich diese noch nicht auf dem Messumformer befindet.

In einer Ausgestaltung wird die sensorspezifische Software vom Sensor an den Messumformer übertragen. Die sensorspezifische Software liegt also im Sensor und nicht wie im Stand der Technik beschrieben im Messumformer.

Die einzelnen Komponenten des Sensors liegen physisch im Sensor, etwa in Form einer kompletten Software als Bytecode, sie wird jedoch auf dem Messumformer im Interpreter ausgeführt. Hierzu muss die sensorspezifische Software einmalig vom Messumformer geladen werden, um ihn anschließend innerhalb seines Interpreters auszuführen. Es besteht zwar die Möglichkeit, einen Bytecode zu verwenden, der direkt auf dem Messumformer ohne Verwendung eines Interpreters ausgeführt wird, allerdings ist dies nur möglich, wenn im Messumformer eine Ausführungseinheit (z.B. Mikrocontroller) mit dazu passender (gleicher) Architektur verwendet wird.

In anderen Worten liefert der Sensor einen Code, welcher auf einem Messumformer ausgeführt wird. Der Sensorcode kann entweder einmalig bei einer Erstverbindung zwischen einem Sensor und Messumformer in den Speicher des Messumformers geladen werden, oder er steht bereits zur Verfügung. Dieser Sensorcode steht dabei entweder standardmäßig oder durch Verwendung der in einer früheren Verbindung gespeicherten Daten bereits zur Verfügung.

In einer Ausgestaltung wird die sensorspezifische Software über eine Speicherkarte, oder über eine Datenverbindung des Messumformers übertragen. Beispiele für eine solche Datenverbindung umfassen eine (direkte) Verbindung ins Internet, etwa per Ethernet oder drahtlos, oder auch über Feldbusprotokolle wie HART, Modbus, Fieldbus Foundation, Profibus etc. Die sensorspezifische Software kann somit auch von einer übergeordneten Einheit wie etwa einer Leitwarte bereitgestellt werden und an den Messumformer über die Kommunikationsverbindung übertragen werden.

In einer Ausgestaltung werden die Schritte ausgeführt: Bereitstellen der sensorspezifischen Software auf dem Messumformer; Übertragen einer Identifikation vom Sensor an den Messumformer; und Ausführen der entsprechenden sensorspezifischen Software anhand der Identifikation des Sensors. Diese Schritte gewährleisten die Abwärtskompatibilität des Messumformers mit älteren Sensoren. Im Allgemeinen ist Abwärtskompatibilität die Verwendbarkeit bzw. Kompatibilität neuerer oder erweiterter Versionen eines technischen Objekts oder Standards zu den Anwendungsbedingungen einer früheren Version.

Die sensorspezifische Software, etwa die Treiber (siehe oben) älterer Sensoren, ist auf dem Messumformer bei Auslieferung vorinstalliert. Ein älterer Sensor identifiziert sich am Messumformer und dieser lädt aus seinem Speicher die entsprechende Software (Treiber, Signalverarbeitungsroutinen, Menüführung etc.) für den Sensor.

In einer Ausgestaltung wird der Schritt ausgeführt: Anschließen von mehreren Sensoren an den Messumformer, wobei für jeden Sensor sensorspezifische Software in einem separaten Interpreter ausgeführt wird. Die verschiedenen Interpreter greifen dabei nur über die Schnittstellen aufeinander zu. Da die verschiedenen Interpreter keinen gemeinsamen Speicherbereich benutzen, ist auch bei einem Absturz eines Interpreters gewährleistet, dass die anderen noch weiter einwandfrei funktionieren.

In einer Ausgestaltung umfasst die Erweiterung ein Datenaufbereitungsmodul, welches zumindest die Schritte durchführt: Einlesen von Eingangswerten über die Schnittstelle; Verarbeiten der Eingangswerte; und Ausgeben der verarbeiteten Eingangswerte als Ausgangswerte über die Schnittstelle.

In seiner einfachsten Form ist das Datenaufbereitungsmodul somit ein Mathematikmodul, das Eingangsdaten verrechnet und wieder ausgibt. Weiter kann das Datenaufbereitungsmodul als Modul zur Berechnung von Chemometrie dienen. Dabei werden Rohdaten mittels eines Modells mit Messgrößen korreliert. Das Modell kann dabei mittels multivariaten Verfahren, insbesondere durch strukturentdeckende Verfahren wie die Hauptkomponentenanalyse oder strukturprüfende Verfahren wie künstliche neuronale Netze, erstellt werden.

In einer Ausgestaltung umfasst die Erweiterung eine Datenquelle, welche zumindest die Schritte durchführt: Generieren von Daten; und Ausgeben der generierten Daten über die Schnittstelle. Bei den Daten handelt es sich etwa um Messdaten, d.h. hiermit werden Messdaten simuliert.
In einer Ausgestaltung umfasst die Erweiterung eine auf einen Anwender angepasste Menüführung. Diese Erweiterung legt die Menüführung fest oder überschreibt eine bestehende Menüführung. Es ist möglich, dass einige Menüs zusätzlich dargestellt werden oder andere Menüs ausgeblendet werden. Verschieden versierten Nutzern wird so ein angepasstes Menü angeboten. Ein erfahrener Nutzer erhält mehr Einstellmöglichkeiten als ein unerfahrener Nutzer.

In einer Ausgestaltung umfasst die Erweiterung eine Oberfläche, mittels derer ein Anwender durch ein oder mehrere Dialoge für eine ergonomische Dateneingabe geführt wird. Dies wird auch als Wizard bezeichnet. Dabei wird der Anwender mittels eher einfacher Dialoge durch komplexe Konfigurationsmöglichkeiten geführt. Beispielsweise kann ein Kalibriervorgang dadurch gesteuert werden.

In einer Ausgestaltung umfasst die Erweiterung eine auf einen Anwender angepasste Darstellung einer Anlage. Dazu kann der Anwender eine Abbildung, etwa ein Foto oder auch eine symbolische Darstellung, seiner Anlage in der Erweiterung hinterlegen. Darin können gewisse für den Anwender relevante Orte markiert werden. So kann beispielsweise jeder Sensor entsprechend seinem tatsächlichen Aufenthaltsort in der Abbildung dargestellt werden. Es ist dann für den Anwender sofort klar, welcher Sensor welche Daten liefert. Umfasst der Messumformer ein Touch-Display, kann auch durch entsprechendes Berühren des Sensors dieser ausgewählt werden. Dadurch vereinfacht sich die Messwertdarstellung, aber etwa auch die Parametrierung. Darüber hinaus kann die Erweiterung anwenderspezifisch entwickelt werden, sodass die Fülle der vom Messumformer bereitstellten Zustandsdaten und Messwerte in eine dem Nutzungsszenario des Anwenders optimierte Darstellung gebracht werden kann.

Die Aufgabe wird weiter gelöst durch einen Messumformer, der zur Ausführung eines oben beschriebenen Verfahrens ausgestaltet ist.

Die Erfindung wird anhand der nachfolgenden Figuren näherer erläutert. Es zeigen
Fig. 2a/b eine Messanordnung umfassend einen Messumformer in zwei verschiedenen Ausführungsformen,
Fig. 3 eine Systemarchitektur einer Sensoranordnung zur Ausführung des Verfahrens, und
Fig. 4 eine Schichtenarchitektur der Sensoranordnung.

In den Figuren sind gleiche Merkmale mit gleichen Bezugszeichen gekennzeichnet.

Der beanspruchte Messumformer 20 findet Anwendung in einer Sensoranordnung 10. Die Sensoranordnung 10 umfasst einen Sensor 1 und ein Anschlusselement 11, worauf zunächst eingegangen werden soll.

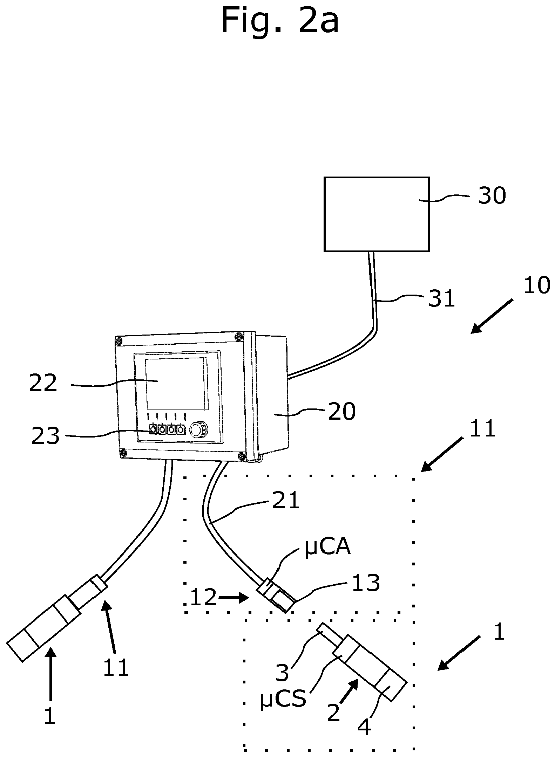

Fig. 2a repräsentiert eine erste Ausgestaltung einer Sensoranordnung 10.

Über eine erste physikalische Schnittstelle 3 kommuniziert ein Sensor 1 mit einem Messumformer 20. Ein alternatives Wort für Messumformer ist Transmitter. Der Messumformer 20 wiederum ist mit einer übergeordneten Einheit 30, etwa einem Leitsystem, über ein Kabel 31 verbunden. Am Messumformer 20 ist sensorseitig ein Kabel 21 angeschlossen, dessen anderes Ende eine zur ersten physikalischen Schnittstelle 3 komplementäre zweite physikalische Schnittstelle 13 umfasst. Ein Anschlusselement 11 umfasst das Kabel 21 samt zweiter physikalischer Schnittstelle 13. Die physikalischen Schnittstellen 3, 13 sind etwa als galvanisch getrennte, insbesondere als induktive Schnittstellen ausgestaltet. Die physikalischen Schnittstellen 3, 13 sind mittels einer mechanischen Steckverbindung miteinander koppelbar. Die mechanische Steckverbindung ist hermetisch dicht, so dass von außen keine Flüssigkeit, etwa das zu messende Medium, Luft oder Staub eindringen kann.

Über die physikalischen Schnittstellen 3, 13 werden Daten (bidirektional) und Energie (unidirektional, d.h. vom Anschlusselement 11 zum Sensor 1) gesendet bzw. übertragen. Die Sensoranordnung 10 wird überwiegend in der Prozessautomatisierung angewendet.

Der Sensor 1 umfasst zumindest ein Sensorelement 4 zum Erfassen einer Messgröße der Prozessautomatisierung. Bei dem Sensor 1 handelt es sich dann etwa um einen pH-Sensor, auch als ISFET, im Allgemeinen einen ionenselektiven Sensor, einen Sensor zur Messung des Redoxpotentials, von der Absorption von elektromagnetischen Wellen im Medium, beispielsweise mit Wellenlängen im UV-, IR-, und/oder sichtbaren Bereich, des Sauerstoffs, der Leitfähigkeit, der Trübung, der Konzentration von nicht-metallischen Werkstoffen oder der Temperatur mit der jeweils entsprechenden Messgröße.

Der Sensor 1 umfasst weiter einen ersten Kupplungskörper 2, welche die erste physikalische Schnittstelle 3 umfasst. Wie erwähnt ist die erste physikalische Schnittstelle 3 zur Übertragung eines von der Messgröße abhängigen Werts an eine zweite physikalische Schnittstelle 13 ausgestaltet. Der Sensor 1 umfasst eine Datenverarbeitungseinheit µCS, etwa einen Mikrocontroller, welcher die Werte der Messgröße verarbeitet, etwa in ein anderes Datenformat wandelt. Die Datenverarbeitungseinheit µCS ist von der Rechenkapazität und Speichervolumen aus Energie- und Platzgründen eher klein bzw. sparsam konzipiert. Der Sensor 1 ist somit nur zu einfachen Rechenoperation ausgestaltet, etwa einer zu Mittelung, Vorverarbeitung und Digitalwandlung.

Es können auch mehrere Sensoren 1 an einen Messumformer 20 angeschlossen werden. In Fig. 2a dargestellt sind zwei Sensoren 1, wobei nur einer der beiden mit allen Bezugszeichen versehen ist. Es können gleiche oder unterschiedliche Sensoren angeschlossen werden. Der linke der beiden ist im zusammengesteckten Zustand dargestellt. An den Messumformer 20 können beispielsweise bis zu acht Sensoren angeschlossen werden.

Der Sensor 1 ist über die physikalischen Schnittstellen 3, 13 mit dem Anschlusselement 11 und schließlich mit dem Messumformer 20 verbindbar. Die Datenverarbeitungseinheit µCS wandelt den von der Messgröße abhängigen Wert (also das Messsignal des Sensorelements 4) in ein dem Messumformer 20 verständliches Protokoll. Ein Beispiel hierfür ist etwa das proprietäre Memosens-Protokoll. Die erste und zweite physikalische Schnittstelle 3, 13 sind also zur bidirektionalen Kommunikation zwischen Sensor 1 und Messumformer 20 ausgestaltet. Wie erwähnt gewährleisten neben der Kommunikation die erste und zweite physikalische Schnittstelle 3, 13 auch die Energieversorgung des Sensors 1.

Das Anschlusselement 11 umfasst die zweite physikalische Schnittstelle 13, wobei die zweite physikalische Schnittstelle 13 komplementär zur ersten physikalischen Schnittstelle 3 ausgestaltet ist. Das Anschlusselement 11 umfasst ebenfalls eine Datenverarbeitungseinheit µCA. Die Datenverarbeitungseinheit µCA kann als Repeater für das gesendete Signal dienen. Weiter kann die Datenverarbeitungseinheit µCA das Protokoll wandeln oder ändern.

Das Anschlusselement 11 umfasst einen zweiten, zylindrischen Kupplungskörper 12, der komplementär zum ersten Kupplungskörper 2 ausgestaltet ist und welcher mit einem hülsenförmigen Endabschnitt auf den ersten Kupplungskörper 2 aufsteckbar ist, wobei die zweite physikalische Schnittstelle 13 in die erste physikalische Schnittstelle 3 gesteckt wird. Eine gegenteilige Anordnung, in der die zweite physikalische Schnittstelle 13 hülsenartig und die erste physikalische Schnittstelle 3 steckerartig ausgestaltet ist, ist ohne erfinderisches Zutun möglich.

Der Messumformer 20 umfasst ein Display 22 und ein oder mehrere Bedienelemente 23, etwa Knöpfe oder Drehknöpfe, über die der Messumformer 20 bedient werden kann. Über das Display 22 werden beispielsweise Messdaten des Sensors 1 angezeigt. Ebenso kann über die Bedienelemente 23 und der entsprechenden Ansicht im Display 20 der Sensor 1 konfiguriert und parametriert werden.

Der Messumformer 20 leitet (Kommunikation 35) die Messdaten über das Kabel 31, wie erwähnt etwa an ein Leitsystem 30, weiter. Das Leitsystem 30 ist dabei entweder als Prozessleitsystem (PLC, SPS), PC oder Server ausgestaltet.

Der Messumformer 20 wandelt die Daten dazu in ein für das Leitsystem verständliches Datenformat, etwa in einem entsprechenden Bus wie HART, Profibus PA, Profibus DP, Foundation Fieldbus, Modbus RS485 oder auch ein Ethernet basierter Feldbus wie EtherNet/IP, Profinet oder Modbus/TCP. Diese Daten werden dann über die Kommunikation 35 an das Leitsystem 30 weitergeleitet. Gegebenenfalls kann dies mit einem Webserver kombiniert werden, d.h. diese können parallel zueinander betrieben werden.

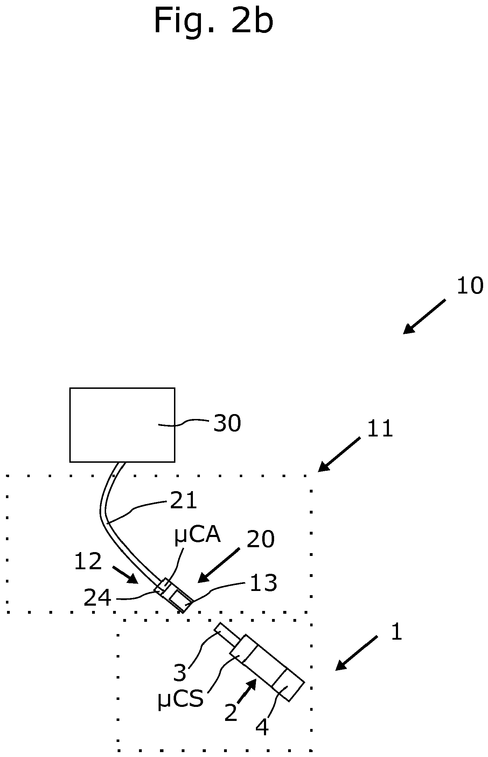

Fig. 2b repräsentiert eine zweite Ausgestaltung einer Sensoranordnung 10. Dabei wird an einen Messumformer 20 jeweils nur ein Sensor 1 angeschlossen. Der Messumformer 20 ist hier symbolisch als Rechteck dargestellt und ist in seinen Abmessungen kleiner als der Messumformer aus Fig. 2a, und hat etwa die Größe einer Streichholzschachtel. Der Messumformer 20 kann hier entweder als separate, an das Kabel 21 ansteckbare Einheit ausgestaltet sein, oder wie hier dargestellt direkt in das Kabel 21 integriert sein. Der Messumformer 20 besteht somit im Wesentlichen aus der Datenverarbeitungseinheit µCA. Der Messumformer 20 umfasst kein Display und hat wenn überhaupt nur ein oder zwei Bedienelemente, die für einen Reset oder zum ein- und ausschalten konfiguriert sind. Bevorzugt umfasst der Messumformer 20 in dieser Ausgestaltung keine Bedienelemente. Der Messumformer 20 umfasst daher ein Drahtlosmodul 24, etwa ein Bluetooth-Modul mit dem Protokollstapel Bluetooth Low Energy. An den Messumformer 20 drahtlos verbindbar ist darüber ein Mobilgerät (nicht dargestellt), etwa ein Mobiltelefon, Tablet, Laptop etc. Über das Mobilgerät kann mittels der Drahtlosverbindung über das Drahtlosmodul 24 der Sensor konfiguriert und parametriert werden. Der Messumformer 20 wandelt die Rohmessdaten so, dass diese direkt an eine übergeordnete Einheit 30, also etwa das Leitsystem, weitergeleitet werden (Kommunikation 35). Wie erwähnt können beispielsweise Daten in einem proprietären Protokoll vom Sensor 1 an das Anschlusselement 11 übertragen werden, während die Datenverarbeitungseinheit µCA dieses proprietäre Protokoll in ein Busprotokoll (Modbus, Foundation Fieldbus, HART, Profibus, EtherNet/IP; siehe oben) wandelt. Die Messumformer in den Fig. 2a und Fig. 2b haben im Wesentlichen die gleiche Grundfunktionalität.

Wie erwähnt ist es im Stand der Technik so, dass im Messumformer 20 ein Treiber sowie etwaige für den Sensor spezielle Signalverarbeitung, Parametrierung etc. vorgehalten werden muss, siehe auch Fig. 1.

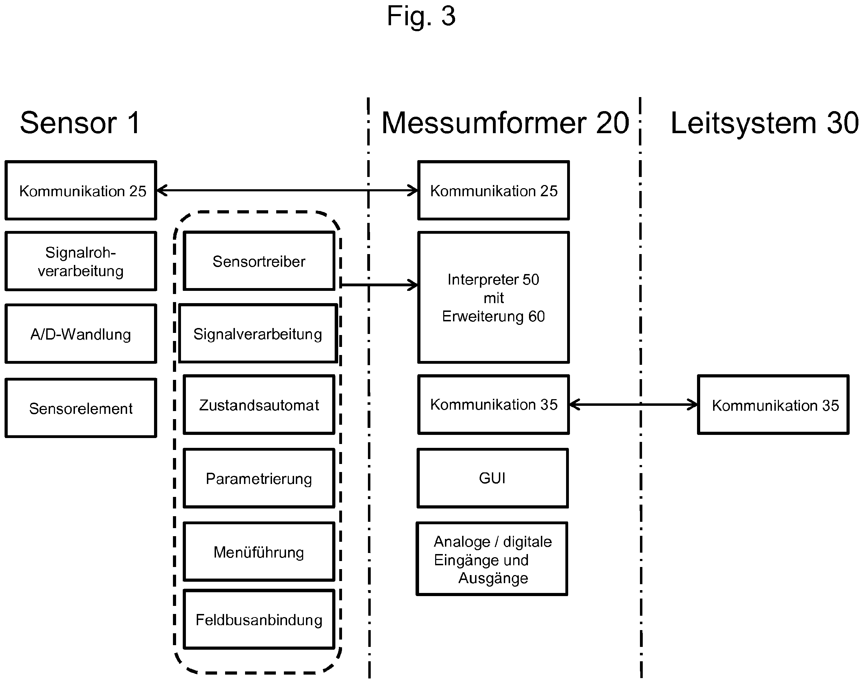

Fig. 3 zeigt eine symbolische Darstellung der Systemarchitektur wie sie im beanspruchten Verfahren beschrieben wird. Bevor genauer auf die Architektur beschrieben wird, soll das beanspruchte Verfahren allgemein nochmals kurz umrissen werden.

Zunächst soll der Messumformer 20 gestartet werden, genauer gesagt wird das Betriebssystem OS des Messumformers 20 gestartet. Im Allgemeinen ist ein Betriebssystem ist eine Zusammenstellung von Softwaremodulen, die die Systemressourcen verwaltet und diese Programmen zur Verfügung stellt. Das Betriebssystem stellt ein oder mehrere Schnittstellen S bereit, die von Programmen, hier insbesondere von einem Interpreter (siehe unten) genutzt werden können. Der Begriff Schnittstelle soll hier und im Folgenden als Softwareschnittstelle verstanden werden. Die oben erwähnten physikalischen Schnittstellen 3, 13 hingegen sind als Hardwareeschnittstellen ausgestaltet.

Die Schnittstelle S ist der Teil eines Systems, welcher der Kommunikation, d.h. dem Austausch von Informationen, dient. Nur über die Schnittstelle ist die Kommunikation zwischen zwei Teilsystemen möglich. Für ein Teilsystem ist es ohne Belang wie das jeweils andere Teilsystem mit der Information intern umgeht und die etwaigen Antworten zustande kommen. Wie erwähnt geht es hierbei um Softwareschnittstellen. Im Allgemeinen sind Softwareschnittstellen logische Berührungspunkte in einem Softwaresystem: Sie ermöglichen und regeln den Austausch von Kommandos und Daten zwischen verschiedenen Prozessen und Komponenten.

Im nächsten Schritt wird auf dem Messumformer 20 ein Interpreter 50 gestartet, wobei der Interpreter 50 auf die Schnittstelle S zugreift. Es können auch mehrere Interpreter 50 gestartet werden, wobei eine Kommunikation zwischen den verschiedenen Interpretern immer nur über die Schnittstelle S erfolgt. Der Interpreter 50 ist instanzüerbar. Im Allgemeinen ist ein Interpreter ein Computerprogramm, das einen Programm-Quellcode im Gegensatz zu Assemblern oder Compilern nicht in eine auf dem System direkt ausführbare Datei übersetzt, sondern den Quellcode einliest, analysiert und direkt ausführt. Die Abarbeitung des Programms erfolgt Schrittweise zur Laufzeit des Programmes ohne vorab in den Maschinencode des Zielsystems umgesetzt zu werden.

In einer ersten Ausführung ist ein Emulator, genauer ein Software-Emulator, als Interpreter 50 zu verstehen. Ein Emulator ist ein Interpreter, da dieser den Maschinencode des Gastsystems befehlsweise mittels eines virtuellen Prozessors abarbeitet. Im dargelegten Beispiel führt der Interpreter 50 (aka Emulator) den Maschinencode des Gastsystems, also einen an den Messumformer 20 angeschlossenen Sensor 1 bzw. dessen Softwareinterpretation (sensorspezifische Software , siehe unten), befehlsweise auf einem virtuellen Prozessor auf dem Messumformer 20 aus.

Im Allgemeinen wird als Emulator ein System bezeichnet, das ein anderes in bestimmten Teilaspekten nachbildet. Das nachgebildete System erhält die gleichen Daten, führt gleiche oder zumindest vergleichbare Programme aus und erzielt möglichst die gleichen Ergebnisse wie das zu emulierende System. Software-Emulatoren sind Programme, die einen Computer nachbilden und es so ermöglichen, Software für diesen Computer auf einem Computer mit einer anderen Architektur zu verwenden.

Im Interpreter 50 wird zumindest eine, bevorzugt genau eine, Erweiterung 60 (pro Interpreter 50) ausgeführt. Es werden mehrere Interpreter 50 pro Messumformer 20 ausgeführt.

Grundsätzlich umfasst ein Interpreter 50 auch die Sonderform einer virtuellen Maschine, die Teile des Maschinencodes des Gastsystems auf dem Hostsystem ausführen kann.

In einer Ausführungsform ist der Interpreter 50 nicht als Emulator ausgestaltet, sondern der Interpreter ist als Skriptspracheninterpreter ausgestaltet. In einer Ausführungsform ist diese Skriptsprache Lua. Andere Beispiele sind Python, VBA, Lisp, VBScript oder JScript.. Grundsätzlich ist es auch möglich verschiedene Skriptspracheninterpreter auf einem Messumformer 20 zu installieren und zu starten. Wie erwähnt kommunizieren die einzelnen Interpreter 50 mittels Schnittstellen S miteinander. Werden diese Schnittstellen S in den Interpretern 50 dann entsprechend implementiert, ist auch eine Kommunikation zwischen den verschiedenen Interpretern 50 problemlos möglich.

Ist der Interpreter 50 gestartet, wird anschließend darauf eine Erweiterung 60 ausgeführt. Eine Erweiterung 60 ist Software, die nicht primär Teil des Messumformers 20 ist, d.h. diese ist explizit nicht Bestandteil des Betriebssystems OS. Die Erweiterung wird zur Laufzeit nachgeladen.

Fig. 3 zeigt die Systemarchitektur des beanspruchten Verfahrens. Es ist ähnlich dargestellt mit den Blöcken wie in Fig. 1. Es soll erwähnt werden, dass in einem ersten Schritt der Sensor 1 mit dem Messumformer 20 verbunden, d.h. angeschlossen wird. Der Sensor 1 sendet eine eindeutige Identifikation an den Messumformer 20. Anhand dieser Identifikation erkennt der Messumformer 20, ob der Sensor 1, d.h. der Sensortyp für ihn bekannt ist. Wie erwähnt umfasst der Messumformer 20 einen Interpreter 50, auf dem eine Erweiterung 60 ausgeführt wird. Über Schnittstellen S kann der Sensor 1 mit dem Messumformer 20 interagieren bzw. über die Schnittstellen S können wie erwähnt die verschiedenen Interpreter 50 miteinander Daten austauschen.

Alle sensorspezifischen Komponenten sind in einer ersten Ausführungsform im Sensor 1 gespeichert. Die sensorspezifischen Komponenten sollen im Folgenden auch als sensorspezifische Software bezeichnet werden. Im Sinne dieser Anmeldung ist die sensorspezifische Software eine Erweiterung 60. Bei der sensorspezifischen Software handelt es sich also um Signalverarbeitung von Sensordaten, um einen oder mehrere Zustandsautomaten, Parametrierung des Sensors, Menüführung des Sensors oder Feldbusanbindung des Sensors. Diese Softwarekomponenten liegen also physisch im Sensor 1, etwa in Form einer kompletten Software als Bytecode. Sie werden jedoch auf dem Messumformer 20 in einem Interpreter 50 ausgeführt. Hierzu müssen die sensorspezifischen Komponenten einmalig auf den Messumformer 20 geladen werden, um ihn anschließend innerhalb seines Interpreter 50 auszuführen. Dies erfolgt üblicherweise nach Anschließen des Sensors 1 an den Messumformer 20, wobei das für den Sensor 1 erforderliche Datenkommunikationsprotokoll zwischen Messumformer 20 und Sensor 1 verwendet wird.

Der Interpreter 50 ist auf allen möglichen Messumformern 20 als Gleichteil ausgeführt, lediglich die notwendigen Schnittstellen S zu seinen eigenen Komponenten wie z.B. dem Display sind messumformerspezifisch und werden entsprechend angepasst. Dabei kann der Interpreter 50 etwa in einer plattformübergreifenden Programmiersprache wie C geschrieben sein, sodass der Quellcode des Interpreters an sich für alle verschiedenen Plattformen dann gleich ist.

Für jeden angeschlossenen Sensor 1 (vgl. Fig. 2a) am Messumformer 20 wird ein eigener Interpreter 50 verwendet. Jeder Sensor 1, bzw. dessen sensorspezifische Software wird also in einem separaten Interpreter 50 ausgeführt.

Grundsätzlich gäbe es die Möglichkeit, einen Bytecode (etwa den auf dem Sensor 1 gespeicherten) zu verwenden, der direkt auf dem Messumformer 20 ohne Verwendung eines Interpreter 50 ausgeführt wird. Dies ist gegebenenfalls jedoch mit Nachteilen behaftet, da unterschiedliche Messumformer unter Umständen verschiedene Mikrocontroller mit unterschiedlichen Mikroarchitekturen verwenden, auf denen kein gemeinsamer Maschinencode ausgeführt werden kann.

Alternativ zur Speicherung der sensorspezifischen Software im Sensor 1, die bei Bedarf auf den Messumformer 20 heruntergeladen wird, befindet sich diese auf einer Speicherkarte (etwa eine SD-Karte), die in den Messumformer 20 gesteckt und auf diesen übertragen wird. In einer Alternative baut der Messumformer 20 eine Datenverbindung ins Internet auf und lädt sich die für den jeweiligen Sensor passende Software herunter. Alternativ wird über den Bus (siehe oben, Kommunikation 35) eine Verbindung etwa zum Leitsystem 30 aufgebaut und das Leitsystem 30 hält die entsprechende Software bereit. Anhand einer eindeutigen Kennung des Sensors 1 wird die jeweils richtige Software gefunden. In einer Alternative ist die sensorspezifische Software bereits auf dem Messumformer 20 vorhanden. Dies kann etwa bei älteren Sensoren der Fall sein, wobei deren spezifische Software bereits bei Auslieferung des Messumformers 20 darauf gespeichert ist.

Wie erwähnt ist es bei Messumformer 20 nach dem Stand der Technik so, dass diese viele Daten für den Sensor bereithalten müssen, in erster Linie dessen Treiber. Um eine Abwärtskompatibilität des beanspruchten Messumformers 20 mit älteren Sensoren 1 zu gewährleisten, umfasst der beanspruchte Messumformer 20 einen Speicher, in dem die von dem alten Sensor benötigten Daten, also insbesondere auch dessen Treiber, gespeichert sind. Demnach ist es mit dem Messumformer 20 auch möglich ältere Sensoren 1, also Sensoren, die ihre eigene sensorspezifische Software selbst nicht bereithalten, zu unterstützen.

Der Messumformer weist eine Aufwärtskompatibilität auf. Als Aufwärtskompatibilität soll hier verstanden werden, dass auch Sensoren unterstützt werden, bzw. unterstützbar sind, die zeitlich erst nach dem Messumformer erscheinen. Bisher war dafür ein komplettes Softwareupdate des Messumformers nötig. Da neuere Sensoren ihre eigene sensorspezifische Software mitbringen, und diese bei Bedarf an den Messumformer nach Anschluss daran übertragen, ist ein Softwareupdate des gesamten Messumformers nicht mehr nötig. Auch kann so für den Messumformer immer die neueste Version eines bestimmten Sensortreibers bereitgestellt werden.

Auf die oben beschriebene Weise ist es möglich, einen Sensor an den Messumformer anzuschließen, wobei die sensorspezifische Software wie erwähnt in einem Interpreter ausgeführt wird.

Neben der Ausführung der Erweiterung als sensorspezifische Software gibt es noch weitere mögliche Erweiterungen. Einige davon sollen im Folgenden vorgestellt werden. Eine Interaktion zwischen den verschiedenen Erweiterungen 60 ist nur über die Schnittstellen S möglich.

Eine mögliche Erweiterung ist ein Datenaufbereitungsmodul. Dieses Datenaufbereitungsmodul liest Eingangswerte über eine Schnittstelle S ein, verarbeitet die Daten weiter und gibt diese dann als Ausgangswerte über eine Schnittstelle S aus. Dieses Modul kann etwa als Mathematik-Modul ausgestaltet sein und die Eingangswerte verrechnen. Es ist denkbar, dass das Datenaufbereitungsmodul über Schnittstellen Daten von einer anderen Erweiterung, etwa die Erweiterung sensorspezifischer Software , erhält und diese weiter verarbeitet, zum Beispiel eine Mittelung oder Glättung durchführt. In einer Ausgestaltung kann das Datenaufbereitungsmodul auch eine Regelung beinhalten. Auch kann das Datenaufbereitungsmodul einen Eingangswert eines externen Sensors etwa über analoge Stromeingänge (4..20 mA) oder digitale Eingänge erhalten und gegebenenfalls weiterverarbeiten und über analoge Stromausgänge oder digitale Ausgänge ausgeben.

Das Datenaufbereitungsmodul kann auch als Datenkonverter verstanden werden. Dadurch können beispielsweise verschiedene Bussysteme miteinander kompatibel gemacht werden. Ist ein Protokoll physikalisch gleich mit einem anderen, so kann durch bloße Verrechnung bzw. Konvertierung in das andere Format der Sensor 1 bzw. Messumformer 20 miteinander kommunizieren. Dadurch kann etwa ein Sensor 1, der eigentlich einem Modbus-Protokoll unterliegt an einen Messumformer 20 angeschlossen werden, der ursprünglich nur das eingangs erwähnte Memosens-Protokoll versteht. Weiter können Daten so aufgearbeitet werden dass diese über Standardschnittstellen, die möglicherweise auch Normen unterliegen, wie beispielsweise HTTP oder HTTPS etc. weitergeleitet werden. Ebenso ist es möglich, fremde Datenquellen und Datensenken anzubinden. Hier soll insbesondere Verbindungen zu Servern und Netzwerken über bekannte Internetprotokolle, wie auch FTP usw. verstanden werden.

Ein Beispiel für eine Erweiterung ist eine Datenquelle, die ausschließlich Daten generiert und über eine Schnittstelle S ausgibt. Diese Erweiterung ist also eine Datensimulation.

Ein Beispiel für eine Erweiterung ist ein Modul zur Durchführung von Chemometrie. Diese Erweiterung kann auch Teil der Erweiterung Datenaufbereitungsmodul sein.

Ein Beispiel für eine Erweiterung ist eine auf einem Anwender angepasste Menüführung. Diese Erweiterung erkennt wer gerade am Messumformer angemeldet ist und/oder welche Rolle der Anwender hat. Anhand dessen wird die Menüführung geändert und angepasst.

Eine Unterstützung, gerade für unerfahrene Anwender, ist eine Erweiterung, mittels derer ein Anwender durch ein oder mehrere Dialoge automatisiert geführt. Dies ist auch als Wizard bekannt. Abhängig von der Antwort auf eine erste Frage wird dem Anwender eine entsprechende zweite Frage bzw. andere Antworten gestellt bzw. zur Verfügung gestellt. So kann der Anwender etwa durch einen Kalibriervorgang mittels Schritt-für-Schritt-Anleitung geführt werden.

Ein Beispiel für eine Erweiterung ist eine auf einem Anwender angepasste Darstellung etwa einer Anlage. Dazu kann der Anwender eine Abbildung, etwa ein Foto oder auch eine symbolische Darstellung, seiner Anlage in der Erweiterung hinterlegen.

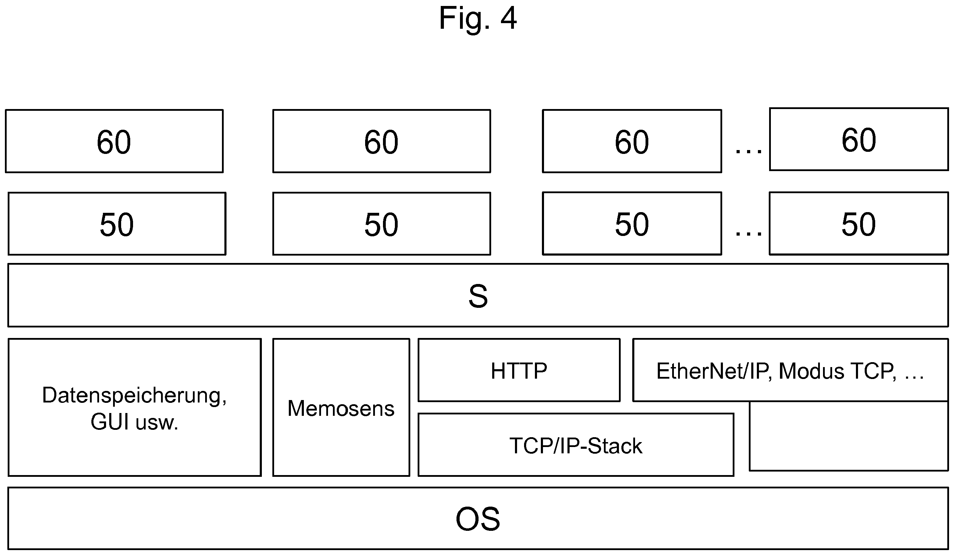

Fig. 4 zeigt eine Schichtenarchitektur der Sensoranordnung nach dem beanspruchten Verfahren. Zuunterst befindet sich das Betriebssystem OS, das als Echtzeitbetriebssystem ausgestaltet ist. Darüber befinden sich der Zugriff auf verschiedene Kommunikationsprotokolle (wie etwa HTTP, aber auch das Kommunikationsprotokoll Memosens der Anmelderin, Busanbindung), aber auch die Datenspeicherung, die grafische Nutzeroberfläche etc. Darüber befinden sich die Schnittstellen S über die die Interpreter 50 auf die oben genannte Kommunikation, Daten etc. zugreifen können. Es sind mehrere Interpreter 50 gestartet, in jedem von ihnen läuft genau eine Erweiterung 60.

### Bezugszeichenliste

- 1: Sensor
- 2: Erster Kupplungskörper
- 3: Erste physikalische Schnittstelle
- 4: Sensorelement
- 10: Sensoranordnung
- 11: Anschlusselement
- 12: Zweiter Kupplungskörper
- 13: Zweite physikalische Schnittstelle
- 20: Messumformer
- 21: Kabel
- 22: Display
- 23: Bedienelemente
- 24: Drahtlosmodul
- 25: Kommunikation 1-20
- 30: übergeordnete Einheit
- 31: Kabel
- 35: Kommunikation 20-30
- 50: Interpreter
- 60: Erweiterung
- µCA: intelligente Einheit in 11
- µCS: intelligente Einheit in 1
- OS: Betriebssystem
- S: Schnittstelle

## Patentansprüche

1. Verfahren zum Betreiben eines Messumformers (20) der Prozessautomatisierungstechnik, umfassend zumindest die Schritte:
Starten des Messumformers (20) durch Starten seines Betriebssystems (OS), wobei das Betriebssystem (OS) zumindest eine Schnittstelle (S) bereitstellt,
Starten zumindest eines Interpreters (50), wobei der Interpreter auf die Schnittstelle (S) zugreift, und
Ausführen einer Erweiterung (60) im Interpreter (50).

2. Verfahren nach Anspruch 1,
wobei der Interpreter (50) als Software-Emulator ausgestaltet ist.

3. Verfahren nach Anspruch 1,
wobei der Interpreter (50) als Skriptspracheninterpreter ausgestaltet ist.

4. Verfahren nach Anspruch 3,
wobei die Skriptsprache Lua ist.

5. Verfahren nach zumindest einem der Ansprüche 1 bis 4,
wobei pro Messumformer (20) mehrere Interpreter (50) ausführbar sind.

6. Verfahren nach zumindest einem der Ansprüche 1 bis 5,
wobei die Erweiterung (60) sensorspezifische Software umfasst und die folgenden Schritte ausgeführt werden:
Anschließen eines Sensors (1) an den Messumformer (20),
Ausführen der sensorspezifischen Software, und
Interaktion des Sensors (1) über die Schnittstelle mit dem Messumformer (20).

7. Verfahren nach Anspruch 6,
umfassend den Schritt:
Übertragen der sensorspezifischen Software auf den Messumformer (20), wenn sich diese noch nicht auf dem Messumformer (20) befindet, etwa vom Sensor (1) an den Messumformer (20), oder über eine Speicherkarte, oder über eine Datenverbindung des Messumformers (20).

8. Verfahren nach Anspruch 6,
umfassend die Schritte:
Bereitstellen der sensorspezifischen Software auf dem Messumformer (20),
Übertragen einer Identifikation vom Sensor (1) an den Messumformer (20), und
Ausführen der entsprechenden sensorspezifischen Software anhand der Identifikation des Sensors (1).

9. Verfahren nach Anspruch 6, 7 oder 8,
wobei die sensorspezifische Software zumindest einen der Schritte ausführt:
Ausführen des Sensortreibers,
Signalverarbeitung von Sensordaten,
Ausführen eines oder mehrerer Zustandsautomaten,
Parametrierung des Sensors,
Aufstellung der Menüführung des Sensors, oder
Feldbusanbindung des Sensors.

10. Verfahren nach Anspruch 9,
wobei durch die Aufstellung der Menüführung die für den Sensor (1) erforderlichen Einstellungen, Parameter, Kalibriervorgänge, Justiervorgänge einstellbar bzw. durchführbar sind.

11. Verfahren nach zumindest einem der Ansprüche 6 bis 10,
umfassend den Schritt:
Anschließen von mehreren Sensoren (1) an den Messumformer (20), wobei für jeden Sensor (1) sensorspezifische Software in einem separaten Interpreter (50) ausgeführt wird.

12. Verfahren nach zumindest einem der Ansprüche 1 bis 11,
wobei die Erweiterung (60) ein Datenaufbereitungsmodul umfasst, welches zumindest die Schritte durchführt:
Einlesen von Eingangswerten über die Schnittstelle,
Verarbeiten der Eingangswerte, und
Ausgeben der verarbeiteten Eingangswerte als Ausgangswerte über die Schnittstelle.

13. Verfahren nach zumindest einem der Ansprüche 1 bis 12,
wobei die Erweiterung (60) eine Datenquelle umfasst, welche zumindest die Schritte durchführt:
Generieren von Daten, und
Ausgeben der generierten Daten über die Schnittstelle.

14. Verfahren nach zumindest einem der Ansprüche 1 bis 13,
wobei die Erweiterung (60) eine auf einen Anwender angepasste Menüführung umfasst.

15. Verfahren nach zumindest einem der Ansprüche 1 bis 14,
wobei die Erweiterung (60) eine Oberfläche umfasst, mittels derer ein Anwender durch ein oder mehrere Dialoge für eine ergonomische Dateneingabe geführt wird.

16. Verfahren nach zumindest einem der Ansprüche 1 bis 15,
wobei die Erweiterung (60) eine auf einen Anwender angepasste Darstellung einer Anlage umfasst.

17. Messumformer (20), der zur Ausführung eines Verfahrens nach zumindest einem der Ansprüche 1 bis 16 ausgestaltet ist.
